# EUROPEAN PATENT SPECIFICATION

(11) **EP 2 370 712 B1**
(45) Date of publication and mention of the grant of the patent: **13.03.2013**
(21) Application number: 09768436.9
(22) Date of filing: 27.11.2009
(51) Int. Cl.: F16H 55/56, F16H 57/02

(54) **ADJUSTABLE PULLEY FOR A CONTINUOUSLY VARIABLE TRANSMISSION**
VERSTELLBARE RIEMENSCHEIBE FÜR EIN STUFENLOSES GETRIEBE
POULIE AJUSTABLE POUR UNE TRANSMISSION A VARIATION CONTINUE

(30) Priority: 28.11.2008 NL 2002260
(43) Date of publication of application: 05.10.2011
(73) Proprietor: Robert Bosch GmbH, 70442 Stuttgart (DE)
(72) Inventor: VAN SPIJK, Johannes Gerardus Ludovicus Maria, 6621 BK Dreumel (NL)
(74) Representative: Plevier, Gabriel Anton Johan Maria
(86) International application number: PCT/NL2009/000234
(87) International publication number: WO 2010/062169

(56) References cited:
- EP-A- 0 616 151
- EP-A- 0 947 736
- DE-A1- 10 114 944
- US-A- 2 896 461
- US-A- 5 776 022

## Description

The invention relates to an adjustable pulley, in particular for a continuously variable transmission or CVT, provided with at least two sheaves on a pulley axle and/or on a bushing of the pulley axle, in which at least one sheave is axially displaceable by means of operating means of the pulley.

Such a pulley is for example known from US patent no. 5,776,022, which represents the closest prior art, and is used especially in CVTs for passenger motor vehicles. In a continuously variable transmission, two pulleys are used which have a drive belt between them, which drive belt is clamped between the two sheaves of the two pulleys during operation by axially moving, i.e. pushing, these towards one another by means of the operating means. The clamping forces exerted on the drive belt by the respective operating means via the pulley sheaves in this case determine the radial positions of the drive belt between the sheaves of the two pulleys and thus the transmission ratio of the CVT. In addition, said clamping forces determine the maximum torque which can be transmitted between the two pulleys, that is to say the maximum frictional force which can be exerted between the drive belt and the pulley sheaves of a respective pulley.

The automobile industry generally strives to make components, in particular the drive line, of motor vehicles as small as possible, with otherwise at least similar material, production and/or usage costs. In the case of the CVT which is mainly used in front wheel-driven motor vehicles and which is fitted in line with the (combustion) engine which is arranged transversely to the direction of travel of the vehicle, in particular the so-called overall axial length is a determining dimension which is to be minimized.
With reference to its Figure 3, this document US 5,776,022 discloses an adjustable pulley, in particular for a continuously variable transmission, comprising two mutually axially displaceable sheaves on a pulley axle, which pulley axle consists of at least two parts that in axial terms are situated at least partially in line with one another, and which pulley axle is provided with a bearing seating on a first axial end and on the radially outer side thereof, wherein the second axle part is provided with a gear wheel and in that the pulley sheaves are provided on the first axle part.
A further prior art document, DE-A-101 14 944 discloses (see its Figure 3) an adjustable pulley, in particular for a continuously variable transmission, comprising two mutually axially displaceable sheaves on a pulley axle and/or on a bushing of the pulley axle, which pulley axle consists of at least two parts that in axial terms are situated at least partially in line with one another, whereof a first axle part is provided with a bore along its entire length wherein a part of a second axle part is situated, and which pulley axle is provided with a bearing seating on a first axial end and on the radially outer side thereof, which first axial end is provided with an annular cylindrical hole, a wall of which is provided with a screw thread.

The invention relates to a measure by means of which the axial dimension of the pulley and thus of the CVT overall can be reduced. According to the invention, the pulley axle is provided with a bearing seating on a first axial end and on the radially outer side thereof and with a cylindrical hole on the radially inner side thereof, which hole at least partially coincides with the bearing seating in the axial direction and a cylinder wall of which is provided with a screw thread. Together with a nut which is substantially L-shaped in cross section and the screw thread of which mates and engages with the screw thread of the pulley axle, a bearing, at least an inner ring thereof, can be clamped. Such a clamping of the bearing only has an advantageously small axial dimension, since the threaded attachment between the nut and the pulley axle coincides with the bearing ring in the axial direction instead of said attachment being axially in line with the bearing ring.

The invention will be explained with reference to the attached figures, in which:
Fig. 1 diagrammatically shows a cross section of the continuously variable transmission with two adjustable pulleys according to the prior art;
Fig. 2 diagrammatically shows a first adjustable pulley according to the invention;
Fig. 3 shows a part of the pulley shown in Fig.2 in more detail, and
Fig. 4 diagrammatically shows the adjustable pulley according to the invention.

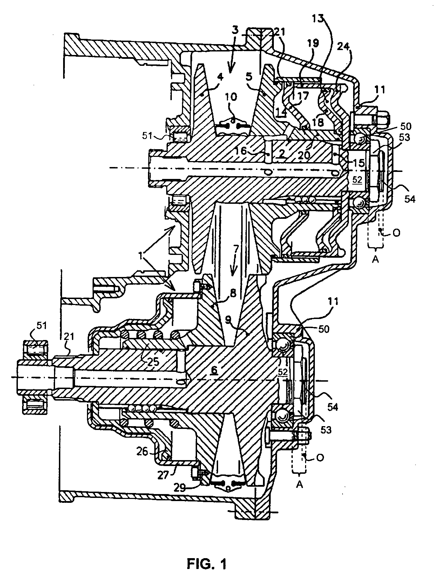

The continuously variable transmission 1 illustrated diagrammatically and in cross section in Fig. 1 is provided inside a transmission housing 11 thereof with two adjustable pulleys 3, 7 according to the prior art. Each of the pulleys 3 and 7, respectively, comprise two sheaves 4,5 and 8, 9, respectively, which are arranged on a primary pulley axle 2 and secondary pulley axle 6, respectively. The sheaves 5 and 8 are axially displaceable, as a result of which the radial position of the drive belt 10 between the pulleys 3 and 7 can be changed and the transmission ratio can be set. The axially displaceable sheaves 5 and 8 are provided with operating means in the form of a piston/cylinder assembly. For the sheave 8, this is a single piston/cylinder assembly 26, 27 and for the sheave 5, this is a double piston/cylinder assembly. The double piston/cylinder assembly comprises two cylinder chambers 13, 14. The cylinder chamber 13 is is enclosed by the cylinder 19, the piston 18, the radial wall 24 and the axle 2. The cylinder chamber 14 is enclosed by the cylinder 21, the piston 17, the sheave 5 and the bushing 20 of the pulley axle 2, to which the sheave 5 is attached. Through the bores 15 and 16, fluid can be passed to and from the cylinder chambers 13 and 14, respectively, in such a manner that the sheave 5 with the bushing 20 is displaced over the pulley axle 2.

The pulley axles 2, 6 are mounted in in each case two bearings 50, 51 in the transmission housing 11, of which at least one bearing 50 is mounted on a respective pulley axle 2 or 6 by means of a nut 53 which is screwed onto an axial end 52 of said axle 2 or 6. To this end, the exterior of the respective pulley axle 2 or 6 is provided with a screw thread at the location of said end 52 thereof. This threaded connection 54 has a certain minimum dimension A in the length or axial direction of the pulley axle 2 or 6 in order to provide strength. The length required for the threaded connection 54 as such in this case determines the thickness of the nut 53, while the total length A of the attachment also comprises an axial excess O of the pulley axle 2 or 6, i.e. an entry and/or exit for the threaded connection 54.

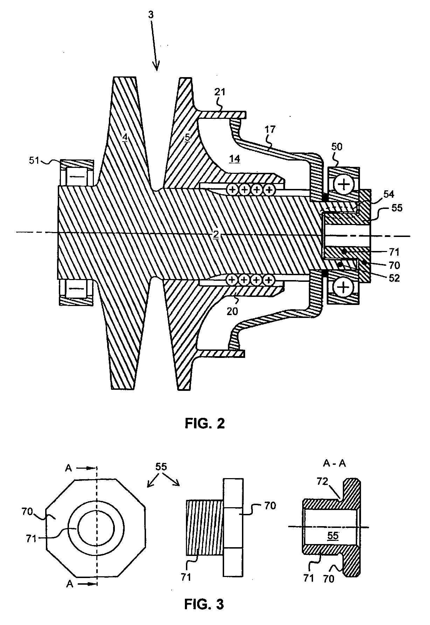

Said minimum dimension Aofthe bearing attachment can advantageously be reduced by using the structure illustrated in Fig. 2 therefor. In the structure illustrated in Fig. 2, the inside of a respective pulley axle 2, namely the primary pulley axle 2 in this example, is provided with a screw thread. To this end, the end 52 of said axle 2 is provided with a cylindrical hole which at least partially coincides in the axial direction with the bearing 50 to be clamped. By means of an, at least in cross section, substantially L-shaped nut or- more generally- enclosure 55 which engages with the pulley axle or- more particularly - the screw thread of which mates and engages with said screw thread of the pulley axle 2, the bearing 50 is clamped between said nut 55 and said axle 2. Due to the fact thatthis threaded connection 54 between the pulley axle 2 and the nut 55 is situated radially inside the bearing 50, the length of the pulley axle 2 can be shortened by at least the length of said axial excess O which was required before. In addition, the axial dimension of that part of the last-mentioned L-shaped nut 55 which is situated beyond the bearing in said direction can be smaller than the thickness A of the conventional annular nut 53 (Fig. 1).

The nut 55 from Fig. 2 is illustrated in Fig. 3 in an axial view (on the left-hand side of Fig. 3), in a side view (in the centre of Fig. 3) and in a cross section (right-hand side of Fig. 3). The nut 55 comprises a flange 70 and a substantially cylindrical bush or cylinder 71 which is provided with a screw thread on its outer circumference. In cross section, it can be seen - in a highly diagrammatic way incidentally - that a notch 72 is provided in a transition between the flange 70 and the bush 71, which notch 72 serves to reinforce the nut 55 with regard to the bending moment which is exerted thereon by a first axial force which acts on the bush 71 or nut 55 via the screw thread 54 thereof, and a second axial force which acts on the flange 70 or the nut 55 via the bearing 50.

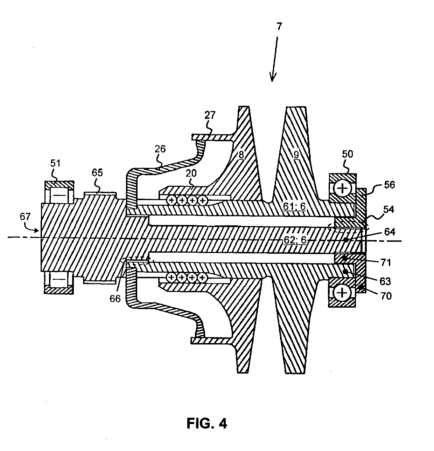

Fig. 4 shows the present invention which is particularly suitable for the secondary or driven pulley 7. In the known transmission (Fig.1), the secondary pulley axle 6 is provided with a gear wheel (not shown) which is pushed onto the secondary pulley axle 6 via a key 21 (Fig. 1) and is thus fixedly connected to said shaft 6 in the direction of rotation. In the axial direction such a gear wheel is fixed between a respective bearing 51 and the piston 26 of the piston/cylinder assembly 26, 27 of the respective, in this case secondary, pulley 7, also by means of said conventional nut 53.

According to the present invention (Fig. 4), the pulley axle 6 of the secondary pulley 7 is divided into two separate axle parts 61 and 62 which, in axial terms, are at least partially in line with one another, and a first axle part 61 of which is provided with a bore along its entire length in which a part of a second axle part 62 is situated. Preferably, the axle parts 61 and 62 are connected in a rotationally fixed manner, for example by a key/groove connection 66.

At least in the axial direction, the two axle parts 61 and 62 are fixed with respect to one another by means of an L-shaped nut 56 which, to this end, engages with an end 64 of the second axle part 62 at the location of an end 63 of the first axle part 61 by means of a threaded connection 54. Thus, the first axle part 61 is clamped between the bearing 50 and the second axle part 62 in the axial direction by means of the last-mentioned nut 56. In contrast to the nut 55 shown in Fig. 3, the screw thread of the nut 56 from Fig. 4 is provided on the radially inner side of the cylindrical bush 71.

According to the invention, the second axle part 62 is provided with an optionally advantageous gear wheel 65 which is integral therewith and the sheaves 8, 9 of the respective pulley 7 are preferably provided on the first axle part 61. In this case, the enclosure of the pulley axle 7 or better the axle parts 61 and 62 thereof, the gear wheel 65 and the piston 26 can be achieved by one single nut 56. This means that the second nut (not shown) which is commonly required at the end 67 which is opposite the first end 63 of the secondary axle 7; 61, 62 has become obsolete in the structure according to the invention. This results in a considerable advantage due to the reduced overall axial length required and complexity of the CVT.

## Claims

1. Adjustable pulley (3;7), in particular for a continuously variable transmission, comprising two mutually axially displaceable sheaves (4, 5; 8, 9) on a pulley axle (2;6) and/or on a bushing (20) of the pulley axle (2; 6), which pulley axle (2; 6) consists of at least two parts (61; 62) that in axial terms are situated at least partially in line with one another, whereof a first axle part (61) is provided with a bore along its entire length wherein a part of a second axle part (62) is situated, and which pulley axle (2; 6) is provided with a bearing seating on a first axial end (52; 63) and on the radially outer side thereof, which first axial end (52; 63) is provided with an annular cylindrical hole, a wall of which is provided with a screw thread, wherein the second axle part (62) is provided with a gear wheel (65) and in that the pulley sheaves (8, 9) are provided on the first axle part (61).

2. Adjustable pulley (3; 7) according to Claim 1, **characterized in that** a rotationally fixed connection (66) is provided between the axle parts (61, 62).

3. Adjustable pulley (3; 7) according to Claim 1 or 2, comprising a substantially annular bearing (50) which is arranged on the pulley axle (2; 6) at the location of the first axial end (52; 63) thereof, and an enclosure (55; 56) which locks the bearing (50), wherein the enclosure (52; 63) in axial terms at the location of and in radial terms inside the bearing (50) engages with the pulley axle (2; 6) or is connected thereto.

4. Adjustable pulley (3;7) according to Claim 3, **characterized in that** the enclosure (52; 63) comprises a nut (52; 63) which is substantially L-shaped in cross section and has a flange (70) and a substantially cylindrical bush (71), the bush (71) of which being provided with a screw thread on the outer circumference and/or the inner circumference thereof.

5. Adjustable pulley (3; 7) according to Claim 4, **characterized in that** it is provided with a notch (72) where the flange (70) and the bush (71) adjoin one another.

## Patentansprüche

1. Verstellbare Riemenscheibe (3; 7), insbesondere für ein stufenloses Getriebe, umfassend zwei bezüglich einander axial verschiebbare Seilscheiben (4, 5; 8, 9) auf einer Riemenscheibenachse (2; 6) und/oder auf einer Buchse (20) der Riemenscheibenachse (2; 6), wobei die Riemenscheibenachse (2; 6) aus mindestens zwei Teilen (61; 62) besteht, die axial zumindest teilweise in einer Linie miteinander angeordnet sind, wobei ein erster Achsteil (61) davon entlang seiner ganzen Länge mit einer Bohrung ausgebildet ist, in der sich ein Teil eines zweiten Achsteils (62) befindet, und wobei die Riemenscheibenachse (2; 6) an einem ersten axialen Ende (52; 63) und auf der radial äußeren Seite davon mit einem Lagersitz versehen ist, wobei das erste axiale Ende (52; 63) mit einem ringförmigen zylindrischen Loch versehen ist, von dem eine Wand mit einem Schraubgewinde versehen ist, wobei der zweite Achsteil (62) mit einem Zahnrad 65) versehen ist und die Seilscheiben (8, 9) der Riemenscheibe auf dem ersten Achsteil (61) vorgesehen sind.

2. Verstellbare Riemenscheibe (3; 7) nach Anspruch 1, **dadurch gekennzeichnet, dass** zwischen den Achsteilen (61, 62) eine drehfeste Verbindung vorgesehen ist.

3. Verstellbare Riemenscheibe (3; 7) nach Anspruch 1 oder 2, die ein im Wesentlichen ringförmiges Lager (50), das auf der Riemenscheibenachse (2; 6) an der Stelle des ersten axialen Endes (52; 63) davon angeordnet ist, und ein Gehäuse (55; 56), das das Lager (50) verriegelt, umfasst, wobei das Gehäuse (52; 63) axial an der Stelle des Lagers (50) und radial innerhalb dessen mit der Riemenscheibenachse (2; 6) in Eingriff steht oder damit verbunden ist.

4. Verstellbare Riemenscheibe (3; 7) nach Anspruch 3, **dadurch gekennzeichnet, dass** das Gehäuse (52; 63) eine Mutter (52; 63) umfasst, die einen im Wesentlichen L-förmigen Querschnitt aufweist und einen Flansch (70) und eine im Wesentlichen zylindrische Buchse (71) hat, wobei die Buchse (71) an seinem Außenumfang und/oder an seinem Innenumfang mit einem Schraubgewinde versehen ist.

5. Verstellbare Riemenscheibe (3; 7) nach Anspruch 4, **dadurch gekennzeichnet, dass** sie mit einer Kerbe (72) versehen ist, an der der Flansch (70) und die Buchse (71) aneinander angrenzen.

## Revendications

1. Poulie ajustable (3 ; 7), en particulier pour une transmission à variation continue, comprenant deux réas (4, 5 ; 8, 9) réciproquement déplaçables axialement sur un arbre de poulie (2 ; 6) et/ou sur un coussinet (20) de l'arbre de poulie (2 ; 6), lequel arbre de poulie (2 ; 6) consiste en au moins deux parties (61 ; 62) qui sont situées axialement au moins partiellement en alignement l'une avec l'autre, parmi lesquelles une première partie d'arbre (61) est pourvue d'un alésage sur toute sa longueur, dans lequel une partie d'une deuxième partie d'arbre (62) est située, et lequel arbre de poulie (2 ; 6) est pourvu d'un logement de palier sur une première extrémité axiale (52 ; 63) et sur le côté radialement extérieur de celui-ci, laquelle première extrémité axiale (52 ; 63) est pourvue d'un trou annulaire cylindrique, une paroi duquel étant pourvue d'un filetage, la deuxième partie d'arbre (62) étant pourvue d'une roue d'engrenage (65) et les réas de poulie (8, 9) étant prévus sur la première partie d'arbre (61).

2. Poulie ajustable (3 ; 7) selon la revendication 1, **caractérisée en ce qu'**une liaison solidaire en rotation (66) est prévue entre les parties d'arbre (61, 62).

3. Poulie ajustable (3 ; 7) selon la revendication 1 ou 2, comprenant un palier sensiblement annulaire (50) qui est agencé sur l'arbre de poulie (2 ; 6) en un emplacement de la première extrémité axiale (52 ; 63) de celui-ci, et une enceinte (52 ; 63) qui bloque le palier (50), l'enceinte (52 ; 63) s'engageant, axialement au niveau de l'emplacement du palier (50) et radialement à l'intérieur du palier (50), avec l'arbre de poulie (2 ; 6) ou étant reliée à celui-ci.

4. Poulie ajustable (3 ; 7) selon la revendication 3, **caractérisée en ce que** l'enceinte (52 ; 63) comprend un écrou (52 ; 63) qui est sensiblement en forme de L en section transversale et qui a un rebord (70) et une douille sensiblement cylindrique (71), la douille (71) duquel étant pourvue d'un filetage sur sa circonférence extérieure et/ou sa circonférence intérieure.

5. Poulie ajustable (3 ; 7) selon la revendication 4, **caractérisée en ce qu'**elle est pourvue d'une encoche (72) là où le rebord (70) et la douille (71) sont attenants l'un à l'autre.
